# EUROPÄISCHE PATENTSCHRIFT

(11) **EP 1 451 474 B1**
(45) Veröffentlichungstag und Bekanntmachung des Hinweises auf die Patenterteilung: **19.04.2006**
(21) Anmeldenummer: 02790263.4
(22) Anmeldetag: 26.11.2002
(51) Int. Cl.: F15B 11/042, F15B 11/044, F16H 61/46, B60K 28/16, B60K 17/10

(54) **ANTRIEB**
DRIVE
DISPOSITIF D'ENTRAINEMENT

(30) Priorität: 28.11.2001 DE 10158212; 22.02.2002 DE 10207749
(43) Veröffentlichungstag der Anmeldung: 01.09.2004
(73) Patentinhaber: Bosch Rexroth AG, 70184 Stuttgart (DE)
(72) Erfinder: PERRY, Graham, William, Edinburgh, EH10 6UG (GB)
(74) Vertreter: Winter, Brandl, Fürniss, Hübner Röss, Kaiser, Polte Partnerschaft Patent- und Rechtsanwaltskanzlei
(86) Internationale Anmeldenummer: PCT/DE2002/004334
(87) Internationale Veröffentlichungsnummer: WO 2003/048587

(56) Entgegenhaltungen:
- DE-A- 2 118 936
- US-A- 5 158 150
- US-A- 5 167 291
- US-A- 5 201 570

## Beschreibung

Die Erfindung betrifft einen Antrieb gemäß dem Oberbegriff des Anspruchs 1. Ein solcher Antrieb ist aus US-5-158-150 bekannt.

Derartige Antriebe werden beispielsweise für hydraulische Antriebssysteme, insbesondere hydrostatische Fahrantriebe verwendet. Dabei werden über eine einzige Pumpe mehrere Hydraulikmotoren, die beispielsweise an den Rädern eines Fahrzeugs angeordnet sind, angetrieben. Um ein hohes Drehmoment zur Verfügung stellen zu können, sollten die Motoren parallel geschaltet werden, so dass sie alle mit dem vollen Systemdruck betreibbar sind. Bei diesen Systemen kann es jedoch vorkommen, dass im Fall von stark unterschiedlichen Lastzuständen an den Motoren derjenige Motor mit der geringsten Last beschleunigt und die anderen Motoren entsprechend abgebremst werden. Bei hydrostatischen Fahrantrieben tritt ein derartiges Problem auf, wenn die Traktion an einem Antriebsrad verringert ist und dieses Rad somit durchdreht. Durch die Erhöhung der Raddrehzahl wird der zugeordnete Motor beschleunigt, so dass praktisch der gesamte Druckmittelvolumenstrom über diesen Motor läuft und das Fahrzeug aufgrund des durchrutschenden Rades stehen bleibt. Durch einen derartigen Schlupf können Beschädigungen an dem Boden, dem Reifen oder an den Motorlagern auftreten.

In der DE 195 31 497 A1 ist ein Fahrantrieb gezeigt, bei dem im Druckmittelströmungspfad zwischen der Hydropumpe und den einzelnen Hydromotoren jeweils eine feststehende Messblende und ein - je nach Durchströmungsrichtung - vor- oder nachgeschaltetes Druck-Kompensationselement vorgesehen sind. Dieses Druckkompensationselement wird einerseits vom Druck in einem Druckleitungsabschnitt zwischen der Messblende und dem Druck-Kompensationselement und andererseits von einem Pilotdruck beaufschlagt, der dem geringsten bzw. höchsten Druck an den Verbrauchern entspricht. Im Falle eines Schlupfes eines Hydromotors wird das entsprechende Druck-Kompensationselement im Zulauf bzw. Ablauf in eine Drosselposition gebracht, so dass sich der Druckmittelvolumenstrom an dem mit Schlupf beaufschlagten Hydromotor nicht verändert.

Dieser hydrostatische Fahrantrieb hat den Nachteil, dass jedem Hydromotor eine Messblende mit konstantem Durchflussquerschnitt und ein Druck-Kompensationselement zugeordnet werden müssen, so dass der vorrichtungstechnische Aufwand erheblich ist.

In der DE 199 30 425 A1 ist ein hydrostatischer Fahrantrieb beschrieben, bei dem die Hydromotoren in Serie hintereinander geschaltet sind. Beiden Hydromotoren ist ein Schaltventil zugeordnet, über das bei Auftreten eines Schlupfes an einem Hydromotor der Druckmittelvolumenstrom zum anderen Hydromotor umgeleitet wird. Für den Fall, dass der Schlupf auch dieses Hydromotors begrenzt werden soll, wird beiden Motoren jeweils ein Schaltventil zugeordnet werden, so dass auch bei dieser Lösung ein erheblicher vorrichtungstechnischer Aufwand erforderlich ist.

In der DE 100 17 901 A1 ist ein hydrostatischer Fahrantrieb mit zwei Hydromotoren beschrieben, denen jeweils ein Zusatzmotor zugeordnet ist. Diese beiden Zusatzmotoren sind mittels eines Nebenkreislaufes mit Druckmittel versorgbar, so dass im Fall eines Schlupfes zwischen den Antriebssträngen eine hinreichende Druckmittelversorgung beider Antriebsstränge gewährleistet ist. Diese Lösung ist nur mit einem erheblichen vorrichtungstechnischen und steuerungstechnischen Aufwand in die Praxis umzusetzen.

Demgegenüber liegt der Erfindung die Aufgabe zugrunde, einen Antrieb zu schaffen, bei dem Schlupf an einem Hydromotor mit minimalem Aufwand kompensierbar ist.

Diese Aufgabe wird durch einen Antrieb mit den Merkmalen des Patentanspruchs 1 gelöst.

Erfindungsgemäß wird jedem der einer Hydropumpe zugeordneten Hydromotoren ein Stromventil zugeordnet, das in seiner Grundposition einen minimalen Öffnungsquerschnitt aufweist und über einen Steuerdruck in Richtung eines größeren bzw. minimalen Öffnungsquerschnittes beaufschlagbar ist. Dieser Steuerdruck wird dabei im Ablauf bzw. im Zulauf des zugeordneten Hydromotors abgegriffen. Dieses Stromventil ist somit als veränderlicher hydraulischer Widerstand mit einem minimalen und einen maximalen Öffnungsquerschnitt ausgebildet und kann im Ablauf- bzw. im Zulauf des Hydromotors angeordnet sein. Dieser hydraulische Widerstand weist insbesondere in seiner Position mit maximalem Öffnungsquerschnitt einen minimalen hydraulischen Widerstand auf, so dass der Druckverlust über dem Stromventil gering ist. Erfindungsgemäß werden die den Steuerdruck führenden Steuerleitungen der veränderlichen hydraulischen Widerstände über eine gemeinsame Pilotleitung miteinander verbunden, so dass praktisch alle Stromventile in eine Richtung mit dem gleichen Steuerdruck d.h. einem Pilotdruck beaufschlagt sind. Dieser Pilotdruck kann je nach Schaltung der geringste Druck im Ablauf der Hydromotoren, der höchste Druck im Zulauf der Hydromotoren oder aber ein Zwischendruck sein. In der Abhängigkeit von diesem Pilotdruck werden die den Hydromotoren jeweils zugeordneten veränderlichen hydraulischen Wiederstände in eine Durchflussposition gebracht, wobei bei einem übermässigen Druckmittelvolumenstrom - beispielsweise verursacht durch einen Schlupf - an einem Hydromotor, dieser Druckmittelvolumenstrom gedrosselt, der betreffende Hydromotor abgebremst und der Schlupf verringert wird, so dass der ordnungsgemäße Betrieb des Systems gewährleistet ist.

Bei einer besonders vorteilhaften Variante der Erfindung wird jeder der Steuerleitungen ein Rückschlagventil zugeordnet, dass derart öffnet, dass der Druck in der Pilotleitung etwa dem Steuerdruck an dem Hydromotor mit dem geringsten Druckmittelvolumenstrom entspricht. D.h., bei dieser vorteilhaften Weiterbildung wird die Durchflussöffnung des hydraulischen Widerstandes in Abhängigkeit von diesem geringsten Druckmittelvolumenstrom eingestellt.

Wie bereits vorstehend erwähnt, kann der veränderliche hydraulische Widerstand, der beispielsweise durch ein Drosselventil ausgebildet werden kann, im Ablauf oder im Zulauf eines Hydromotors angeordnet werden. Im erstgenannten Fall wird der variable hydraulische Widerstand von einer Feder in Richtung des kleineren Querschnittes und von dem Pilotdruck in der Gegenrichtung beaufschlagt, während im letztgenannten Fall die Feder und der Pilotdruck in Richtung des kleineren Querschnittes und der Druck stromaufwärts des variablen Widerstands umgekehrt in Richtung des größeren Querschnittes wirkt.

Zur Dämpfung von Schwingungen eines Ventilkörpers des veränderlichen Widerstandes werden in einer bevorzugten Ausführungsform Dämpfungsdrosseln in Steuerleitungen angeordnet.

Gemäß einer Weiterbildung der Erfindung können den veränderlichen hydraulischen Wiederständen jeweils eine variable Drosseleinrichtung zugeordnet werden, so dass eine Drosselung des Druckmittelvolumenstroms zusätzlich über diese Drosseleinrichtung erfolgt. Die weitere Drosseleinrichtung kann sowohl im Zulauf als auch im Ablauf des Hydromotors vorgesehen werden.

Der über die Pilotleitung abgegriffene Pilotdruck kann zur Ansteuerung einer auf den Hydromotor wirkenden Bremse verwendet werden, so dass der Schlupf an diesem Hydromotor über die Bremse verringerbar ist.

Bei einer weiteren Variante der Erfindung kann über den Hydromotor ein Hilfsmotor angetrieben werden, über den ein Steuerölvolumenstrom zum veränderlichen hydraulischen Widerstand und von dort zurück in die Ablauf- bzw. Zulaufleitung des Hydromotors gefördert wird. Über diesen Hilfsmotor wird dann der wirksame Steuer- oder Pilotdruck zur Verstellung des veränderlichen hydraulischen Widerstandes generiert.

Sonstige vorteilhafte Weiterbildungen der Erfindung sind Gegenstand der weiteren Unteransprüche.

Im folgenden werden bevorzugte Ausführungsbeispiele der Erfindung anhand schematischer Zeichnungen näher erläutert. Es zeigen:
Figur 1 zeigt ein Hydraulikschaubild einer Grundkomponente einer erfindungsgemäßen Einrichtung mit einem Hydromotor und einem im Ablauf angeordneten veränderlichen hydraulischen Widerstand;
Figur 2 zeigt eine Kennlinie des veränderlichen hydraulischen Widerstandes aus Figur 2;
Figur 3 zeigt eine Schaltung der Grundkomponenten aus Figur 1 mit zwei Hydromotoren, die mit gleichen Druckmittelvolumenströmen beaufschlagt sind;
Figur 4 zeigt das Schaltbild aus Figur 3 mit unterschiedlichen Druckmittelvolumenströmen;
Figur 5 zeigt die Kennlinien der veränderlichen hydraulischen Widerstände bei unterschiedlichen Druckmittelvolumenströmen;
Figur 6 zeigt die Verschiebung der Kennlinien gemäß Figur 5 bei Veränderung des Druckbereichs;
Figur 7 zeigt einen Antrieb mit vier Grundkomponeten gemäß Figur 1;
Figur 8 zeigt eine Variante der Grundkomponente gemäß Figur 1 mit zusätzlicher Drosseleinrichtung;
Figur 9 zeigt eine Variante der Grundkomponente aus Figur 1 mit Bremseinrichtung;
Figur 10 zeigt eine Anordnung gemäß Figur 8 im Zulauf eines Hydromotors und
Figur 11 zeigt eine Variante der Grundkomponente gemäß Figur 1, wobei ein Steuerölvolumenstrom über einen Hilfsmotor erzeugt wird.

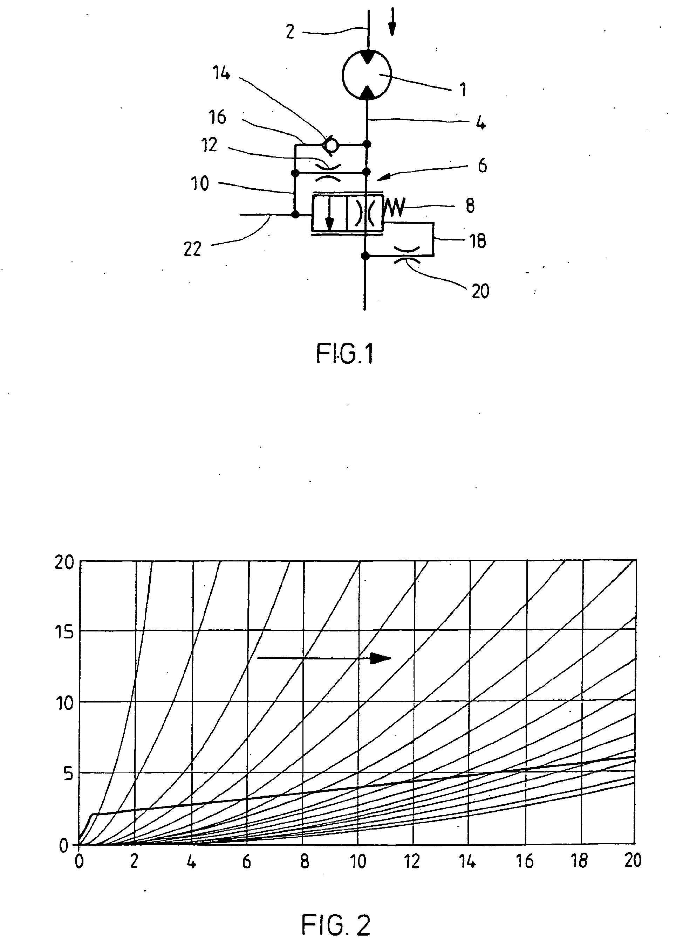

Figur 1 zeigt ein hydraulisches Prinzipschaltbild einer Grundkomponente eines erfindungsgemäßen Antriebs, der bei den im folgenden beschriebenen Ausführungsbeispielen als hydrostatischer Fahrantrieb ausgeführt ist. Der Antrieb hat eine nicht dargestellte Hydropumpe, über die mehrere Hydromotoren 1 parallel mit Druckmittel versorgbar sind. Dieses wird über einen Zulauf 2 dem Hydromotor 1 zugeführt und über einen Ablauf 4 in einen Tank oder zur Pumpe zurückgeführt. Im Ablauf 4 des Hydromotors 1 ist ein variabler hydraulischer Widerstand 6 angeordnet, der über eine Feder 8 in eine Grundposition vorgespannt ist. In dieser Grundposition hat der variable Widerstand einen minimalen Durchflussquerschnitt. Bei bestimmten Bedingungen kann es sogar vorteilhaft sein, wenn dieser Durchflussquerschnitt in der Grundposition verschlossen ist. Der variable Widerstand 6 läßt sich über einen im folgenden noch näher beschriebenen Steuerdruck verringern, wobei der Durchflussquerschnitt stetig bis zu einem Maximaldurchmesser vergrössert wird. Dieser variable Widerstand 6 kann beispielsweise durch ein Stromventil, insbesondere ein Drosselventil mit veränderlichen Querschnitt gebildet sein.

Ein Ventilkörper dieses variablen Widerstandes 6 wird in Öffnungsrichtung (größerer Durchflussquerschnitt) über den Druck in einer Steuerleitung 10 beaufschlagt. Diese Steuerleitung 10 verbindet die in Richtung des größeren Öffnungsquerschnittes wirksame Steuerfläche des variablen Widerstandes 6 mit dem Niederdruckanschluß des Hydromotors 1 (Ablauf 4). In der Steuerleitung 10 ist eine Drossel 12 angedeutet. Parallel zu dieser ist ein zur Ablaufleitung 4 hin öffnendes Rückschlagventil 14 in einer Zweigsteuerleitung 16 angeordnet. Eine in Richtung der Feder 8 wirksame Steuerfläche des variablen Widerstandes 6 ist über eine Leitung 18 mit einer Dämpfungsdrossel 20 mit dem stromabwärts des variablen Widerstandes 6 befindlichen Abschnitt des Ablaufs 4 verbunden, so dass hochfrequente Bewegungen des Ventilkörpers des variablen Widerstandes 6 gedämpft werden. Der Druck stromab des variablen Widerstands 6 ist üblicherweise weitgehend konstant.

In die Steuerleitung 10 mündet eine einen Pilotdruck führende Pilotleitung 22 ein. Für den Fall, dass der Druck in der Pilotleitung 22 größer als der Druck im Ablauf 4 ist, kann das Steueröl von der Pilotleitung 22 über das Rückschlagventil 14 zum Ablauf 4 hin abgeführt werden. In dem Fall, in dem die Pilotleitung 22 abgesperrt ist, wird der in Öffnungsrichtung des variablen Widerstandes 6 wirksame Steuerdruck in der Steuerleitung 10 durch den Durchfluss des Druckmittels durch den Widerstand 6 und damit durch den Druckabfall über den Widerstand bestimmt, wobei der in Öffnungsrichtung wirksame Druck über die Drossel 12 im Ablauf 4 abgegriffen wird und die in Schließrichtung wirksame Kraft durch die Kraft der Feder 8 und den Druck stromabwärts des Widerstandes bestimmt ist. In einem statischen Zustand nimmt der Ventilkörper des hydraulischen Widerstands 6 eine Position ein, in der die durch den in Öffnungsrichtung wirkenden Steuerdruck erzeugte Kraft gleich der Summe der Kraft der Feder 8 und der durch den in Schließrichtung wirkenden Steuerdruck erzeugten Kraft ist.

Figur 2 zeigt Kennlinien eines derartigen variablen hydraulischen Widerstandes, wobei der Druckverlust über dem Volumenstrom dargestellt ist. Mit den dünnen Linien sind dabei die Kennlinien in Abhängigkeit von unterschiedlich wirksamen Durchflussquerschnitten eines hydraulischen Widerstandes gezeigt, wobei der wirksame Durchflussquerschnitt in Pfeilrichtung zunimmt. Es handelt sich hierbei im Prinzip um die Kennlinien einer Messblende mit jeweils konstantem Querschnitt.

Die Kennlinie des variablen hydraulischen Widerstandes 6 ist mit der dicken Linie in Figur 2 dargestellt. Demgemäß steigt die Kennlinie zunächst ähnlich wie bei einem konstantem Querschnitt mit steigendem Volumenstrom an. Sobald die in Öffnungsrichtung wirksame Druckkraft die Kraft der Feder 8 und die Druckkraft in der Leitung 18 übersteigt, wird der wirksame Durchflussquerschnitt des variablen Widerstandes 6 vergrößert, so dass sich der in Figur 2 dargestellte nahezu lineare, vergleichsweise flache Verlauf der Kennlinie einstellt. Dieser etwa lineare Anstieg der Kennlinie erstreckt sich über den gesamten Bereich, in dem der variable Widerstand 6 von seinem minimalem Durchflussquerschnitt zum maximalem Durchflussquerschnitt aufgesteuert wird. Nach Erreichen des maximalen Durchflussquerschnittes und weiterem Ansteigen des Volumenstroms hat der variable Widerstand 6 eine Kennlinie, die entsprechend der dünnen Linien in Figur 2 ansteigt.

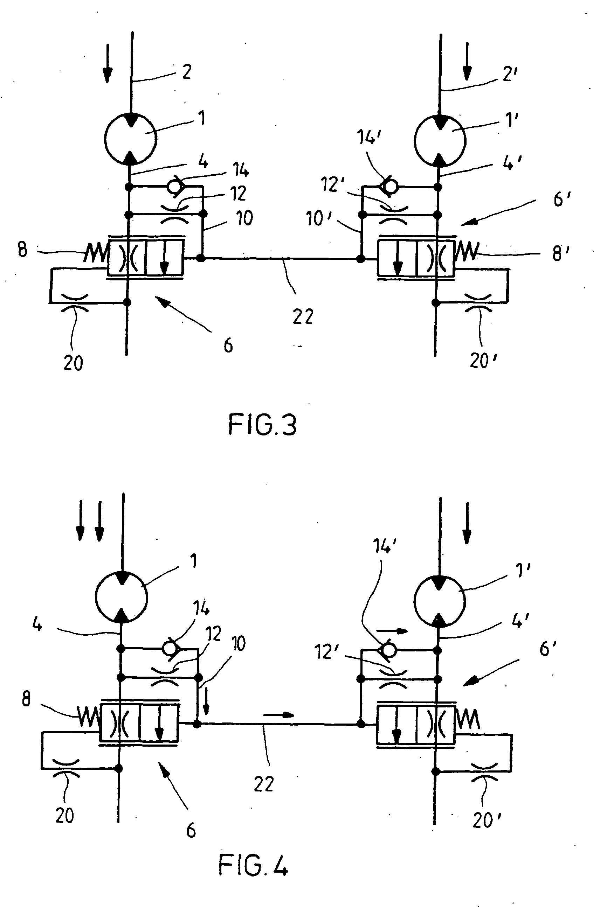

Figur 3 zeigt eine Schaltung für einen Fahrantrieb, mit dem beispielsweise ein linkes und ein rechtes Rad antreibbar ist. Die beiden Zweige werden im folgenden der Einfachheit halber mit dem gleichen Bezugszeichen wie in Figur 1 bezeichnet, wobei zur besseren Unterscheidbarkeit ein Zweig mit einem " ' "gekennzeichnet ist.

Demgemäß werden beide Hydromotoren 1, 1' über jeweils einen Zulauf 2, 2' und eine nicht dargestellte Hydropumpe mit Druckmittel versorgt. Im Ablauf 4, 4' der Hydromotoren 1, 1' ist jeweils ein variabler Widerstand 6, 6' angeordnet, der jeweils über eine Feder 8, 8' in seine Position mit minimalem Durchflussquerschnitt vorgespannt ist. In Gegenrichtung sind die Widerstände 6, 6' mit dem in einer Pilotleitung 22 anstehenden Druck beaufschlagt. Die Pilotleitung 22 ist mit zwei Steuerleitungen 10, 10' verbunden. Zwischen jeder Steuerleitung 10, 10' und einem Ablauf 4, 4' sind parallel zueinander eine Drossel 12, 12' und ein zum Ablauf öffnendes Rückschlagventil 14, 14' angeordnet. Es sei nun angenommen, dass beide Hydromotoren 1, 1' gleich belastet sind und somit mit dem gleichen Druckmittelvolumenstrom durchströmt werden, d. h. der Druck im Zulauf bzw. im Ablauf der Hydromotoren 1, 1' ist jeweils gleich. Entsprechend ist auch der Druckverlust über dem variablen Widerstand 6 in den Zweigen identisch, so dass beide Widerstände 6, 6' in eine Position mit gleichem Durchflussquerschnitt gebracht werden, in der der Druckverlust über dem variablen hydraulischen Widerstand 6, 6' vergleichsweise gering ist. D. h., es stellt sich in Abhängigkeit vom Volumenstrom über den Hydromotor 1, 1' ein Druckverlust gemäß der Kennlinie in Figur 2 ein.

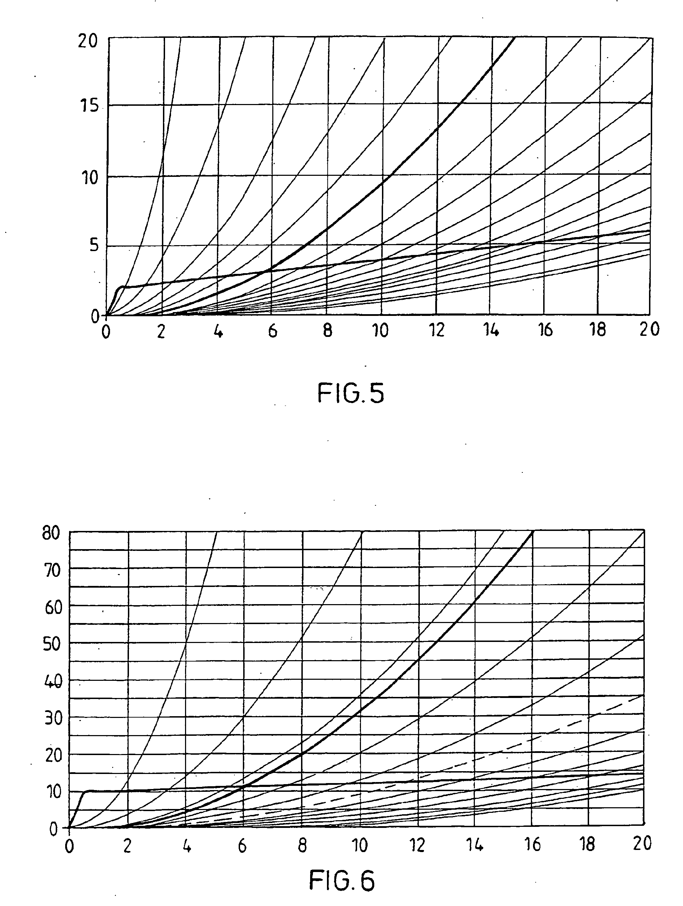

Nimmt man nun an, dass - wie in Figur 4 dargestellt - der Hydromotor 1 mit einem wesentlich größeren Volumenstrom als der Hydromotor 1' durchströmt wird, so stellt sich an dem Hydromotor 1' mit dem geringeren Durchfluss ein Druckverlust gemäß der Kennlinie aus Figur 2 ein, die auch in Figur 5 (flachere Kennlinie) dargestellt ist. D. h., der sich im Bereich zwischen dem Eingang des variablen Widerstandes 6' und dem Niederdruckanschluss des Hydromotors 1' einstellende Gegendruck ist geringer als derjenige, der sich im entsprechenden Bereich des Hydromotors 1 einstellen würde, wenn die Pilotleitung 22 abgesperrt wäre. Der dem Hydromotor 1 zugeordnete variable Widerstand 6 ist mit einem größeren Durchfluss beaufschlagt, so dass der Druckverlust über dem Widerstand 6 größer und somit der Druck im Ablauf 4 größer als der entsprechende Druck im Ablauf 4' ist. Dieser größere Druck wird über die Steuerleitung 10 in die Pilotleitung 22 gemeldet. Entsprechend liegt am Eingang des Rückschlagventils 14' ein größerer Druck als im Ablauf 4' an. Das Rückschlagventil 14 öffnet und der Druck in der Pilotleitung 22 wird auf den Druck im Ablauf 4' abgesenkt. Durch diesen verringerten Druck in der Pilotleitung 22 wird der in Öffnungsrichtung des variablen Widerstandes 6 wirksame Druck abgesenkt, so dass dieser durch die Kraft der Feder 8 in eine Durchflussposition gebracht wird, die im wesentlichen durch den Druck im Ablauf 4' des Hydromotors 1', d. h. durch den geringsten Druck (Gegendruck) des Systems bestimmt ist. Der variable Widerstand 6 wird somit in Abhängigkeit von diesem geringsten Druck in eine Position gebracht, in der im Ablauf 4 ein größerer Gegendruck als bei abgesperrter Pilotleitung 22 entsteht, so dass der Hydromotor 1 abgebremst und der Schlupf an diesem Antriebsrad verringert wird.

Erfindungsgemäß wird der Volumenstrom in den Zweigen mit größerem Durchfluss somit durch den Gegendruck des Hydromotors 1' mit dem geringsten Durchfluss bestimmt, wobei dieser niedrigste Druck durch die Rückschlagventile 14 in der Pilotleitung 22 wirksam ist. Das System funktioniert aber auch ohne die Rückschlagventile 14, da sich dann in Abhängigkeit von den Gegendrücken an den jeweiligen Hydromotoren ein "mittlerer" Druck in der Pilotleitung 22 aufbaut, über den bei den Hydromotoren mit größerem Durchfluss ein erhöhter Gegendruck aufbaubar ist, durch den die zugeordneten Hydromotoren abgebremst werden.

In Figur 5 sind die Kennlinien eines derartigen Systems dargestellt. Wie bereits vorstehend erwähnt, hat die Kennlinie des Hydromotors 1 mit dem geringsten Durchfluss den Verlauf, der bereits in Figur 2 dargestellt ist - der Druck steigt etwa linear mit dem Volumenstrom an. Gemäß den oben stehenden Ausführungen wird der wirksame Durchflussquerschnitt des hydraulischen Widerstandes 6 des Hydromotors 1 mit größerem Durchfluss in Abhängigkeit von dem Gegendruck am anderen Hydromotor 1' auf einen konstanten Wert mit geringerem Durchflussquerschnitt eingestellt, als er sich bei abgesperrter Pilotleitung 22 einstellen würde. Aufgrund dieses konstanten, geringeren Durchflussquerschnittes verläuft die Kennlinie des Widerstandes 6 im wesentlichen wie bei einem Widerstand mit nicht veränderbarem Durchflussquerschnitt (dicke, steil ansteigende Linie in Figur 5).

In Figur 6 sind die Kennlinien für größere Druckbereiche dargestellt, wobei die Kennlinie des hydraulischen Widerstandes 6 mit größerem Durchfluss in Figur 6 gestrichelt eingezeichnet ist. Gemäß dieser Darstellung wird in höheren Druckbereichen entsprechend der sich am Eingang des variablen Widerstandes 6 einstellende Gegendruck (variabler hydraulischer Widerstand mit größerem Durchfluss) wesentlich höher (dicke Linie in Figur 6) als der sich in geringeren Druckbereichen einstellende Gegendruck (gestrichelte Linie).

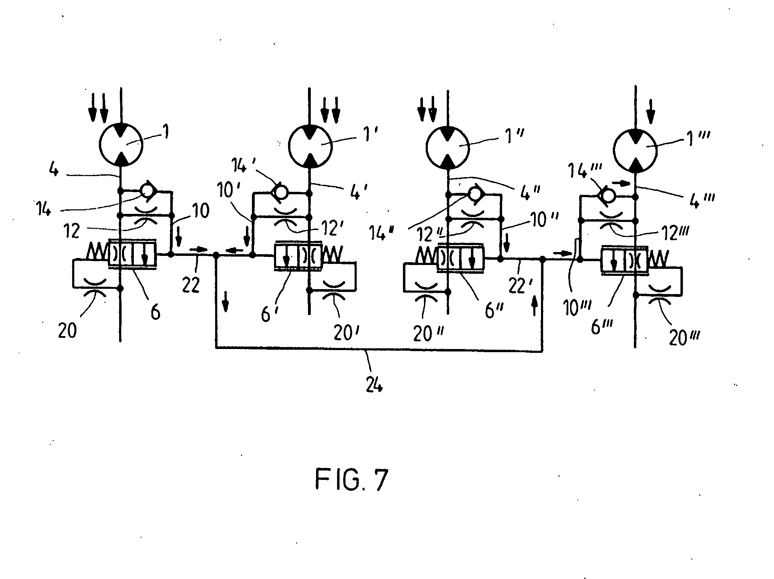

Bei dem in Figur 7 dargestellten Ausführungsbeispiel eines hydrostatischen Fahrantriebes werden über eine gemeinsame Hydropumpe vier Hydromotoren 1, 1', 1" und 1"' mit Druckmittel versorgt. Im Ablauf 4, 4', 4'', 4''' jedes Hydromotors 1 (1'...) ist jeweils eine Ventilanordnung gemäß den vorhergehenden Ausführungen mit einem variablen hydraulischen Widerstand 6 (6',...), einer Drossel 12 (12',...), einem Rückschlagventil 14 (14',...) sowie der Steuerleitung 10 (10',...) und den sonstigen vorbeschriebenen Komponenten ausgebildet. Die Steuerleitungen 10, 10' der Widerstände 6, 6' sind über die Pilotleitung 22 und die Steuerleitungen 10" und 10"' über eine Pilotleitung 22' miteinander verbunden. Diese beiden Pilotleitungen 22, 22' stehen widerum über einen Pilotkanal 24 miteinander in Verbindung, so dass bei geöffneten Pilotleitungen 22, 22' und dem geöffneten Pilotkanal 24 die in Öffnungsrichtung wirksamen Steuerflächen der hydraulischen Widerstände mit dem gleichen Druck beaufschlagt sind.

Es sei angenommen, das der Durchfluss durch die Hydromotoren 1, 1', 1" größer ist als der Durchfluss durch den Hydromotor 1"'. Aufgrund dieses vergleichsweise geringen Durchflusses ist der Druckabfall über dem variablen Widerstand 6' ' ' gering, so dass sich in der Ablaufleitung 4' ' ' ein geringer Gegendruck einstellt. Aufgrund des höheren Durchflusses in den Ablaufleitungen 4, 4' und 4" würden die zugeordneten variablen Widerstände 6, 6' bzw. 6" in eine Position mit größerem Öffnungsquerschnitt als der Widerstand 6''' verschoben werden. Dieser größere Druck wird jedoch über die Pilotleitung 22, den Pilotkanal 24 und die Pilotleitung 22' zum Eingang des Rückschlagventils 14''' gemeldet. Aufgrund des relativ geringen Druckes im Ablauf 4"' wird das Rückschlagventil 14''' geöffnet und der Druck in den Pilotleitungen 22, 22' im wesentlichen auf den Druck im Ablauf 4"' abgesenkt. Entsprechend werden die variablen Widerstände 6, 6', 6" in eine Position mit geringerem Öffnungsquerschnitt gebracht, so dass sich im Ablauf 4, 4', 4" ein höherer Gegendruck aufbaut und die zugeordneten Hydromotoren 1, 1' und 1" abgebremst werden. Demzufolge wird auch bei diesem System mit einer Vielzahl von Hydromotoren 1, 1' , 1", 1"' der Öffnungsquerschnitt der mit einem höheren Volumenstrom durchströmten variablen Widerstände 6 in Abhängigkeit vom Gegendruck an dem Hydromotor 1"' mit geringstem Durchfluss eingestellt. Würde man die Rückschlagventile 4 (4',...) weglassen, so würde sich wieder ein "mittlerer" Druck in den Pilotleitungen 22, 22' einstellen, so dass die Hydromotoren mit größerem Druchfluss ebenfalls entsprechend abgebremst werden.

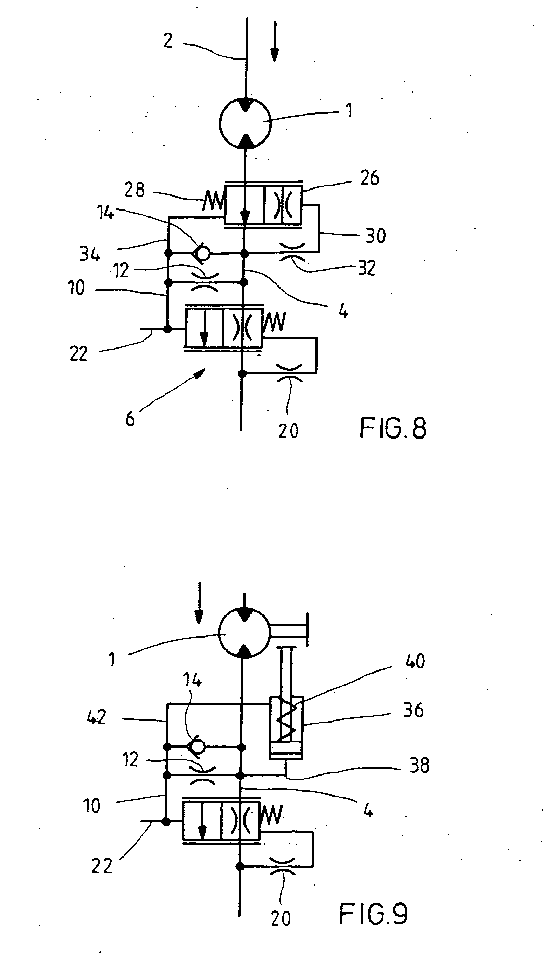

Die Wirkung der erfindungsgemäßen Ventilanordnung lässt sich weiterverbessern, wenn im Zu- oder Ablauf des Hydromotors 1 eine zusätzliche Drosseleinrichtung 26 gemäß Figur 8 vorgesehen wird. Ein Ventilkörper dieser Drosseleinrichtung 26 wird durch eine Druckfeder 28 in eine Position mit maximalem Durchflussquerschnitt vorgespannt. In dieser Grundposition ist der Druckverlust über der Drosseleinrichtung 26 minimal. Diese wird in Richtung eines geringeren Durchflussquerschnittes durch den Druck im Ablauf, d. h. am Eingang des variablen Widerstandes 6 beaufschlagt, der über eine Drosselleitung 30 mit Drossel 32 abgegriffen wird. Der Federraum der Drosseleinrichtung 26 ist über einen Steuerleitungsabschnitt 34 mit der Steuerleitung 10 und damit der Pilotleitung 22 verbunden. Beim Aufbau eines vergleichsweise großen Gegendruckes im Ablauf 4 (Volumenstrom durch Hydromotor 1 ist größer als durch die anderen Hydromotoren, variabler Widerstand 6 wird über den Pilotdruck auf einen im wesentlichen konstanten, geringeren Durchströmungsquerschnitt eingestellt) wird die Drosseleinrichtung 26 in Richtung des kleineren Durchflussquerschnittes verschoben, so dass ein zusätzlicher, den Hydromotor 1 abbremsender Gegendruck aufgebaut wird. Die dem Hydromotor mit geringem Durchfluss zugeordnete Drosseleinrichtung 26 ist aufgrund des geringeren Gegendruckes im Ablauf 4 in ihre Position mit maximalem Öffnungsquerschnitt eingestellt, in der der Druckverlust minimal ist.

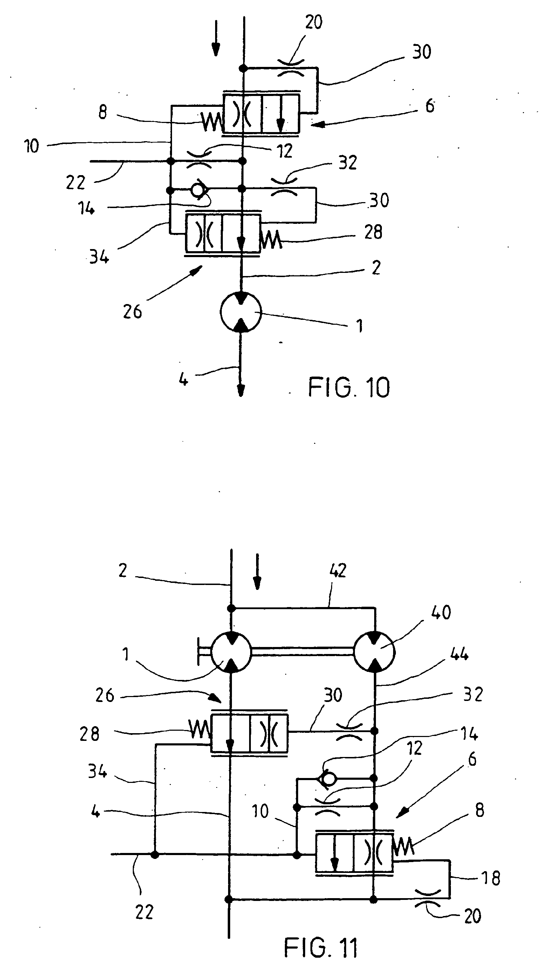

Wie bereits erwähnt, kann die Drosseleinrichtung 26 sowohl im Ablauf 4 als auch im Zulauf 2 angeordnet werden. Anstelle oder zusätzlich zu der Drosseleinrichtung 26 kann zum Abbremsen des Hydromotors 1 auch eine dynamisch wirkende Bremse 36 gemäß Figur 9 verwendet werden. Ein Federraum 40 der Bremse 36 ist über eine Rückstellleitung 42 mit der Steuerleitung 10 und damit der Pilotleitung 22 verbunden. Diese Bremse 36 wird über den Pilot- oder Steuerdruck betätigt, der über eine Bremsleitung vom Ablauf 4 abgegriffen wird. D. h., diese Bremse 36 rückt aufgrund des sich durch die erfindungsgemäße Steuerung bei dem Hydromotor 1 mit größerem Durchfluss aufbauenden Gegendrucks ein und bremst den Hydromotor 1 zusätzlich ab.

In Figur 10 ist eine Variante dargestellt, bei der der variable Widerstand 6 im Zulauf 2 des Hydromotors 1 angeordnet ist, wobei eine Drosseleinrichtung 26, wie sie bereits bei dem Ausführungsbeispiel gemäß Figur 8 erläutert wurde, zwischen dem variablen Widerstand 6 und dem Hydromotor 1 vorgesehen ist. Der variable Widerstand 6 wird wie bei den vorbeschriebenen Versionen über die Feder 8 in seine Position mit geringerem Öffnungsquerschnitt vorgespannt und wird gleichzeitig über den Druck in der Steuerleitung 10 in die gleiche Richtung beaufschlagt. In der Gegenrichtung, d. h. in Richtung des größeren Öffnungsquerschnittes ist der Ventilkörper des variablen Widerstandes 6 über die Drosselleitung 30 durch den Druck stromaufwärts des variablen Widerstandes 6 beaufschlagt. Das Rückschlagventil 14 öffnet dabei in Richtung zu der an die Steuerleitung 10 angeschlossenen Pilotleitung 22, so dass entsprechend der höchste am Ausgang eines variablen Widerstandes 6 auftretende Druck in der Pilotleitung 22 anliegt. Dieser höchste Druck wird entsprechend durch den geringsten Druckmittelvolumenstrom verursacht, da dann der kleinste Druckabfall über dem variablen Widerstand entsteht.

Die Drosseleinrichtung 26 ist dann entsprechend durch den über den Steuerleitungsabschnitt 34 abgegriffenen Druck in der Pilotleitung 22 in Richtung geringerer Durchflussquerschnitt und durch den über die Drosselleitung 30 abgegriffenen Druck am Ausgang des variablen Widerstandes 6 in Richtung größerer Öffnungsquerschnitt vorgespannt. Wird nun das in Figur 10 dargestellte System mit Zulaufsteuerung (meter-in) bei der Versorgung mehrerer Hydromotoren 1 durch eine gemeinsame Hydropumpe verwendet (siehe Figuren 4 und 7), so bestimmt der Hydromotor mit dem geringsten Durchfluss den Druck in der Pilotleitung 22, da in diesem Fall im Bereich zwischen dem variablen Widerstand 6 und der Drosseleinrichtung 26 aufgrund des geringen Durchflusses der größte Druck über das Rückschlagventil 14 in die Pilotleitung 22 gemeldet wird. Entsprechend werden die variablen Widerstände 6 der Hydromotoren 1 mit größerem Durchfluss in eine Drosselstellung mit konstanten, geringerem Querschnitt verschoben als dies bei abgesperrter Pilotleitung 22 der Fall wäre. Zusätzlich wird der Druckmittelvolumenstrom über die Drosseleinrichtung 26 gedrosselt, da diese durch den größeren Druck in der Pilotleitung 22 in Richtung geringerer Öffnungsquerschnitt verschoben wird - die Hydromotoren 1 mit größerem Durchfluss werden entsprechend abgebremst und der Schlupf an den zugeordneten Antriebsrädern verringert.

Bei den vorbeschriebenen Ausführungsbeispielen wurde der Steuerdruck zur Betätigung des variablen Widerstandes 6 im Zulauf oder im Ablauf des Hydromotors 1 abgegriffen. Bei dem in Figur 11 dargestellten Ausführungsbeispiel wird der Steuerdruck von einem Hilfsmotor 40 generiert, der vom zugeordneten Hydromotor 1 angetrieben wird. In Abhängigkeit von der Drehzahl des Hydromotors 1 wird Steueröl über eine Zuführleitung 42 dem Hilfsmotor 40 zugeführt, dessen Niederdruckseite mit einem Hilfsmotorablauf 44 verbunden ist. In diesem ist der variable hydraulische Widerstand 6 angeordnet, dessen Ventilkörper über die Feder 8 in Richtung des geringsten Durchflussquerschnittes vorgespannt ist. Der Federraum und der Ausgang des Widerstandes 6 sind über die Leitung 18 und die Dämpfungsdrossel 20 mit dem Ablauf 4 des Haupt-Hydromotors 1 verbunden, so dass das Steueröl nach dem Durchströmen des Widerstandes 6 zurückgeführt wird.

Vom Hilfsmotorablauf 44 zweigt die in der Pilotleitung 22 einmündende Steuerleitung 10 ab, über die der im Hilfsmotorablauf 44 anliegende Druck als Steuerdruck zu der in Richtung des größeren Durchflussquerschnittes wirksamen Steuerfläche geführt wird. Parallel zur Drossel 12 ist in der Steuerleitung 10 das Rückschlagventil 14 vorgesehen, über das die Pilotleitung 22 mit dem Hilfsmotorablauf 44 verbindbar ist.

Im Ablauf 4 des Hydromotors 1 ist die Drosseleinrichtung 26 angeordnet, die durch die Druckfeder 28 in ihre Grundposition mit maximalem Öffnungsquerschnitt vorgespannt ist. Der Federraum der Druckfeder 28 ist des weiteren über den Steuerleitungsabschnitt 34 mit der Pilotleitung 22 verbunden. Die Drosseleinrichtung 26 ist in Richtung des minimalen Öffnungsquerschnittes durch den Druck in der Drosselleitung 30 beaufschlagt, der dem Druck im Hilfsmotorablauf 44 entspricht. D. h., bei dieser Variante wird der Abfluss des Hydromotors 1 über die Drosseleinrichtung 26 gedrosselt und somit ein den Hydromotor 1 bremsender Gegendruck aufgebaut, während über den variablen hydraulischen Widerstand 6 ein den Hilfsmotor 40 bremsender Gegendruck erzeugt wird.

Für den Fall, dass mehrere der in Figur 11 gezeigten Zweige über eine gemeinsame Hydropumpe mit Druckmittel versorgt werden, wird der Druck in der gemeinsamen Pilotleitung 22 durch den Gegendruck an dem Hilfsmotor 40 mit dem geringsten Durchfluss bestimmt, der entsprechend dem Hydromotor 1 mit dem geringsten Durchfluss zugeordnet ist. Die hydraulischen Widerstände 6 und Drosseleinrichtungen 26 der anderen Hydromotoren 1, Hilfsmotore 40 werden in Abhängigkeit von diesem niedrigen Steuerdruck in eine im wesentlichen konstante Durchflusspositon gebracht, deren wirksamer Durchmesser kleiner ist als in demjenigen Fall, in dem die Pilotleitung 22 abgesperrt wäre und somit die Querverbindung zwischen den einzelne Zweigen unterbrochen wäre - entsprechend werden die zugeordneten Hydromotore durch den entstehenden erhöhten Gegendruck abgebremst und der Schlupf der Antriebsräder verringert.

Bei dem vorbeschriebenen Ausführungsbeispiel wird nur ein kleiner Teil des Druckmittels verwendet, um den Steuerdruck in der Pilotleitung zu erzeugen, so dass der Leistungsverlust im Hauptzweig gering ist. Der Hauptvolumenstrom über dem Hydromotor 1 wird nur dann angedrosselt, wenn ein Schlupf festgestellt wird und somit der Volumenstrom zu groß wird.

Insbesondere bei Anordnungen, bei denen die vorbeschriebenen Ventile (variabler hydraulischer Widerstand 6 und Drosseleinrichtung 26) im Zulauf des Hydromotors angeordnet sind, kann es erforderlich sein, ein Antikavitationsventil im Bereich des Zulaufanschlusses des Motors vorzusehen. Dieses Antikavitationsventil versorgt den Motor mit Druckmittel, wenn dieser durch eine äußere Last, beispielsweise bei Bergabfahrt des Fahrzeuges angetrieben wird, so dass Kavitationserscheinungen verhindert sind.

Ein wesentlicher Vorteil der vorbeschriebenen Komponenten besteht darin, dass diese ohne größere Umbauten sowohl im Zulauf- als auch im Ablauf (meter-in; meter-out) angeordnet werden können und auch eine Nachrüstung bestehender Systeme möglich ist. Die erfindungsgemäße Lösung lässt es des weiteren zu, dass die Motoren in Parallelschaltung angeordnet werden können, wobei jedem der Hydromotoren im System zumindest ein veränderlicher hydraulischer Widerstand gemäß der vorhergehenden Beschreibung und ggf. eine Droseleinrichtung zugeordnet wird, so dass praktisch eine unbegrenzte Anzahl an Motoren geregelt werden kann.

Die Druckverluste der erfindungsgemäßen Anordnung sind minimal, da keine feststehenden Blenden im Haupt-Druckmittelströmungspfad vorhanden sind. Insbesondere bei geringen Volumenströmen ist das Ansprechverhalten des Systems optimal, wobei ein gutes Anfahrverhalten und ein geringer Leistungsverlust bei hohen Drehzahlen des Hydromotors gewährleistet ist. Das System ist sehr einfach aufgebaut und ohne zusätzliche Eingaben oder Steuerung von aussen ständig aktiv. Die eingesetzten Hydraulikkomponenten lassen sich äußerst kompakt in den Motorblock integrieren oder mit einem zusätzlichen Gehäuse versehen. Der Antrieb lässt sich mit minimalen Anpassungen bei Fahrantrieben unterschiedlicher Verdrängungsvolumina und Radgrößen verwenden, wobei auch Radialkolbenmotoren mit zwei Förderrichtungen verwendbar sind.

Offenbart ist ein Antrieb mit einer Hydropumpe, über die zumindest zwei Hydromotoren mit Druckmittel versorgbar sind. Der erfindungsgemäße Antrieb hat im Zulauf oder im Ablauf jedes Hydromotors einen veränderlichen hydraulischen Widerstand, der in eine Grundposition mit minimalem Öffnungsquerschnitt vorgespannt ist und über einen Steuerdruck in Richtung eines größeren Öffnungsquerschnittes beaufschlagbar ist. Dieser Steuerdruck ist vom Druck im Zulauf oder im Ablauf des Hydromotors abhängig.
- 1: Hydromotor
- 2: Zulauf
- 4: Ablauf
- 6: variabler Widerstand
- 8: Feder
- 10: Steuerleitung
- 12: Drossel
- 14: Rückschlagventil
- 16: Zweigsteuerleitung
- 18: Leitung
- 20: Dämpfungsdrossel
- 22: Pilotleitung
- 24: Pilotkanal
- 26: Drosseleinrichtung
- 28: Druckfeder
- 30: Drosselleitung
- 32: Drossel
- 34: Steuerleitungsabschnitt
- 36: Bremse
- 38: Bremsleitung
- 40: Hilfsmotor
- 42: Zuführleitung
- 44: Hilfsmotorablauf

## Patentansprüche

1. Antrieb mit einer Hydropumpe, über die zumindest zwei Hydromotoren (1, 1') mit Druckmittel versorgbar sind, wobei einem Ab bzw. Zulauf (4, 2) jedes Hydromotors (1) ein Stromventil zum Drosseln des Druckmittel- oder Steuerölvolumenstromes zugeordnet ist, wobei jedes Stromventil ein veränderlicher hydraulischer Widerstand (6) mit einem maximalen und einem minimalen Öffnungsquerschnitt ist, und wobei ein Ventilkörper des Widerstandes(6) über eine Feder (8) in seine Grundposition mit minimalem Öffnungsquerschnitt vorgespannt ist und über einen Steuerdruck in Richtung größeren bzw. minimalen Öffnungsquerschnitt beaufschlagbar ist, wobei der Steuerdruck vom Druck im Ablauf (4) bzw. im Zulauf (2) eines Hydromotors (1) abhängig ist, **dadurch kennzeichnend, daß** die den Steuerdruck führenden Steuerleitungen (10) mit einem Leitungsabschnitt zwischen den Hydromotoren (1, 1') und dem jeweiligen Stromventil verbunden sind und über eine Pilotleitung (22, 24) miteinander in Verbindung stehen.

2. Antrieb nach Patentanspruch 1, wobei in jeder Steuerleitung (10) ein Rückschlagventil (14) vorgesehen ist, das derart öffnet, dass der Druck in der Pilotleitung (22, 24) etwa auf denjenigen Steuerdruck an dem Hydromotor (1) mit dem geringsten Druckmittelvolumenstrom einstellbar ist.

3. Antrieb nach Patentanspruch 1, wobei der veränderliche hydraulische Widerstand (6) ein stetig verstellbares Drosselventil hat, das in einer Endstellung einen minimalen und in der anderen Endstellung einen maximalen Durchflussquerschnitt aufweist.

4. Antrieb nach einem der vorhergehenden Patentansprüche, wobei der veränderliche hydraulische Widerstand (6) im Ablauf (4) des Hydromotors (1, 40) angeordnet ist und in Richtung des kleineren Durchflussquerschnittes von der Feder (8) und in Richtung des grö-ßeren Öffnungsquerschnittes über die Steuerleitung (10) durch den Gegendruck im Ablauf des Hydromotors (1, 40) beaufschlagbar ist.

5. Antrieb nach einem der Patentanspüche 1 bis 3, wobei der veränderliche hydraulische Widerstand im Zulauf (2) des Hydromotors (1) angeordnet ist und in Richtung des kleineren Durchflussquerschnittes von der Feder (8) und den über die Steuerleitung (10) abgegriffenen Steuerdruck im Zulauf (2) des Hydromotors und in Richtung des größeren Öffnungsquerschnittes durch den Druck stromaufwärts des veränderlichen Widerstandes (6) beaufschlagt ist.

6. Antrieb nach einem der vorhergehenden Patentansprüche, wobei in den Steuerleitungen (10) Drosseln (12) angeordnet sind, die zu ggf. vorhandenen Rückschlagventilen (14) parallel geschaltet sind.

7. Antrieb nach einem der vorhergehenden Patentansprüche, mit einer weiteren variablen Drosseleinrichtung (26), die in Schliessrichtung von dem Steuerdruck beaufschlagt ist.

8. Antrieb nach einem der vorhergehenden Patentansprüche, mit einer auf den Hydromotor wirkenden Bremse, die durch den Steuerdruck betätigbar ist.

9. Antrieb nach einem der vorhergehenden Patentansprüche, wobei der Hydromotor (1) einen Hilfsmotor (40) oder eine Hilfspumpe antreibt, so dass ein Steuerölvolumen zum veränderlichen hydraulischen Widerstand (6) und von dort zurück in die Ablauf- oder Zulaufleitung (2, 4) förderbar ist und wobei in Abhängigkeit von diesem Steuerölvolumenstrom über die Steuerleitung der auf den veränderlichen hydraulischen Widerstand (6) wirkende Steueredruck abgreifbar ist.

10. Antrieb nach Patentanspruch 7 und 9, wobei die Drosseleinrichtung (26) im Zulauf oder Ablauf (2, 4) des Hydromotors (1) angeordnet ist und über den Steuerdruck in Richtung kleinerer Öffnungsquerschnitt beaufschlagt ist.

## Claims

1. A drive mechanism including a hydraulic pump whereby at least two hydraulic motors (1, 1') may be supplied with pressure medium, wherein a flow valve for throttling the pressure medium or control oil flow is associated to a meter-out or meter-in (4, 2) side of each hydraulic motor (1), wherein each flow valve is a variable hydraulic resistor (6) having a maximum and a minimum open cross-section, and wherein a valve body of the resistor (6) is biased into its basic position of minimum open cross-section by a spring (8) and may be subjected to a control pressure in a direction of increased or minimum open cross-section, wherein the control pressure is dependent on the pressure on the meter-out (4) or meter-in (2) side of a hydraulic motor (1), **characterized in that** the control lines (10) conducting the control pressure are connected to a line section between the hydraulic motors (1, 1'), and the respective flow valve and interconnected via a pilot line (22, 24).

2. The drive mechanism in accordance with claim 1, wherein in each control line (10) a check valve (14) is provided which opens in such a way that the pressure in the pilot line (22, 24) may approximately be set to the one control pressure at the hydraulic motor (1) having the lowest pressure medium flow rate.

3. The drive mechanism in accordance with claim 1, wherein the variable hydraulic resistor (6) includes a continuously adjustable throttle valve having in one end position a minimum cross-section of flow and in the other end position a maximum cross-section of flow.

4. The drive mechanism in accordance with any one of the preceding claims, wherein the variable hydraulic resistor (6) is arranged on the meter-out (4) side of the hydraulic motor (1, 40) and may be subjected to the action of the spring (8) in the direction of reduced cross-section of flow, and to the back pressure on the meter-out side of the hydraulic motor (1, 40) in the direction of increased open cross-section via the control line (10).

5. The drive mechanism in accordance with any one of claims 1 to 3, wherein the variable hydraulic resistor (6) is arranged on the meter-in (4) side of the hydraulic motor (1) and may be subjected to the action of the spring (8) and to the control pressure on the meter-in (2) side of the hydraulic motor tapped via the control line (10) in the direction of reduced cross-section of flow, and to the pressure upstream from the variable resistor (6) on the meter-out side of the hydraulic motor (1, 40) in the direction of increased open cross-section.

6. The drive mechanism in accordance with any one of the preceding claims, wherein throttles (12) connected in parallel with optionally provided check valves (14) are arranged in the control lines (10).

7. The drive mechanism in accordance with any one of the preceding claims, including another variable throttle means (26) subjected to the control pressure in the closing direction.

8. The drive mechanism in accordance with any one of the preceding claims, including a brake that acts on the hydraulic motor and may be influenced by the control pressure.

9. The drive mechanism in accordance with any one of the preceding claims, wherein the hydraulic motor (1) drives a secondary motor (40) or a secondary pump, so that a control oil volume may be supplied to the variable hydraulic resistor (6) and back from there on the meter-out or meter-in line (2, 4), and wherein the control pressure acting on the variable hydraulic resistor (6) is tapped in accordance with this control oil flow across the control line.

10. The drive mechanism in accordance with claim 7 and 9, wherein the throttle means (26) is arranged on the meter-in or meter-out (2, 4) side of the hydraulic motor (1) and is subjected to the control pressure in a direction of reduced open cross-section.

## Revendications

1. Dispositif d'entraînement avec une pompe hydraulique, par le biais de laquelle au moins deux moteurs hydrauliques (1, 1') peuvent être alimentés en moyen de pression, un régulateur de débit étant attribué à une conduite d'écoulement et/ou d'arrivée (4, 2) de chaque moteur hydraulique (1) pour régler le débit volumétrique du moyen de pression ou de l'huile de commande, chaque régulateur de débit étant une résistance (6) hydraulique variable avec une section maximale et minimale d'ouverture, et un corps de soupape de la résistance (6) étant précontraint par le biais d'un ressort (8) dans sa position de base avec une section minimale d'ouverture et pouvant être poussé par le biais d'une pression de commande en direction d'une section d'ouverture plus grande et/ou minimale, la pression de commande étant dépendante de la pression régnant dans la conduite d'écoulement (4) et/ou d'arrivée (2) d'un moteur hydraulique (1), **caractérisé en ce que** les conduites de commande (10) conduisant la pression de commande sont reliées à un tronçon de conduite situé entre les moteurs hydrauliques (1, 1') et le régulateur respectif de débit, et communiquent l'une avec l'autre par le biais d'une conduite pilote (22, 24).

2. Dispositif d'entraînement selon la revendication 1, dans lequel chaque conduite de commande (10) est prévue une soupape de retenue (14) qui s'ouvre à tel point que la pression dans la conduite pilote (22, 24) est réglable à peu près sur la pression de commande au moteur hydraulique (1) avec le plus faible débit volumétrique du moyen de pression.

3. Dispositif d'entraînement selon la revendication 1, dans lequel la résistance (6) hydraulique variable a une soupape d'étranglement réglable en continu, qui dans une position finale comporte une section minimale d'écoulement et dans une autre position finale une section maximale d'écoulement.

4. Dispositif d'entraînement selon l'une des revendications précédentes, dans lequel la résistance (6) hydraulique variable est disposée dans la conduite d'écoulement (4) du moteur hydraulique (1, 40) et peut être poussée par le ressort (8) en direction de la plus faible section d'écoulement et en direction de la plus grande section d'ouverture via la conduite de commande (10) par la contre-pression dans la conduite d'écoulement du moteur hydraulique (1, 40).

5. Dispositif d'entraînement selon l'une des revendications 1 à 3, dans lequel la résistance hydraulique variable est disposée dans la conduite d'arrivée (2) du moteur hydraulique (1) et peut être poussée en direction de la plus petite section d'écoulement par le ressort (8) et par la pression de commande prélevée via la conduite de commande (10) dans la conduite d'arrivée (2) du moteur hydraulique et en direction de la plus grande section d'ouverture par la pression en amont de la résistance (6) variable.

6. Dispositif d'entraînement selon l'une des revendications précédentes, dans lequel dans les conduites de commande (10) sont disposés des étranglements (12) qui sont montés parallèlement aux soupapes de retenue (14), le cas échéant, existantes.

7. Dispositif d'entraînement selon l'une des revendications précédentes, avec un autre dispositif variable d'étranglement (26), qui est poussé dans le sens de fermeture par la pression de commande.

8. Dispositif d'entraînement selon l'une des revendications précédentes, avec un frein agissant sur le moteur hydraulique, frein qui peut être actionné par la pression de commande.

9. Dispositif d'entraînement selon l'une des revendications précédentes, dans lequel le moteur hydraulique (1) entraîne un moteur auxiliaire (40) ou une pompe auxiliaire de sorte qu'un volume d'huile de commande peut être refoulé en direction de la résistance (6) hydraulique variable et reconduit à partir de là dans la conduite d'écoulement ou d'arrivée (2, 4), et dans lequel en fonction de ce débit volumétrique d'huile de commande la pression de commande agissant sur la résistance (6) hydraulique variable peut être prélevée via la conduite de commande.

10. Dispositif d'entraînement selon la revendication 7 et 9, dans lequel le dispositif d'étranglement (26) est disposé dans la conduite d'arrivée ou d'écoulement (2, 4) du moteur hydraulique (1) et est poussé par le biais de la pression de commande en direction de la plus petite section d'ouverture.
